# EUROPÄISCHE PATENTSCHRIFT

(11) **EP 2 050 619 B1**
(45) Veröffentlichungstag und Bekanntmachung des Hinweises auf die Patenterteilung: **30.05.2012**
(21) Anmeldenummer: 08012982.8
(22) Anmeldetag: 18.07.2008
(51) Int. Cl.: B60Q 11/00

(54) **Vorrichtung und Verfahren zum Ermitteln eines Betriebsparameters von zumindest einem Leuchtmittel einer Lichtquelle eines Kraftfahrzeuges**
Method and device for calculating an operating parameter of at least one illuminant of a light source for a motor vehicle
Dispositif et procédé d'émission d'un paramètre de fonctionnement d'au moins un moyen d'éclairage d'une source lumineuse d'un véhicule automobile

(30) Priorität: 17.10.2007 DE 102007049618
(43) Veröffentlichungstag der Anmeldung: 22.04.2009
(73) Patentinhaber: Audi AG, 85045 Ingolstadt (DE)
(72) Erfinder: Hummel, Benjamin, 85276 Pfaffenhofen (Ilm) (DE)
(74) Vertreter: Thielmann, Frank

(56) Entgegenhaltungen:
- EP-A1- 1 562 406
- EP-A2- 1 410 949
- DE-A1-102005 051 212
- US-A1- 2007 228 262

## Beschreibung

Die Erfindung betrifft eine Vorrichtung zum Ermitteln eines Betriebsparameters von zumindest einem Leuchtmittel einer Lichtquelle eines Kraftfahrzeugs. Des Weiteren betrifft die Erfindung ein Kraftfahrzeug mit einer zumindest ein Leuchtmittel aufweisenden Lichtquelle und einer solchen Vorrichtung sowie ein Verfahren zum Ermitteln eines Betriebsparameters von zumindest einem Leuchtmittel einer Lichtquelle eines Kraftfahrzeuges.

Bei aus dem Stand der Technik bekannten Vorrichtungen zum Ermitteln eines Betriebsparameters des Leuchtmittels einer Lichtquelle eines Kraftfahrzeuges wird beispielsweise ein Mindeststrom gemessen, welcher durch das Leuchtmittel fließt. So kann ein Ausfall des Leuchtmittels detektiert werden, wenn kein Mindeststrom mehr durch das Leuchtmittel fließt.

Die US 2007/0228262 A1 beschreibt ein Objekterkennungssystem mit einer LEDs aufweisenden Lichtquelle. Die LEDs der Lichtquelle werden von einem Regler so angesteuert, dass sie ein moduliertes und gepulstes Lichtsignal aussenden. Ein Detektor erfasst das von dem Objekt reflektierte Licht, welches aufgrund der Modulation des ausgesendeten Lichts eine Signatur aufweist. Die Entfernung oder die Geschwindigkeit des Objekts wird von einer Signalverarbeitungseinheit auf der Basis der Abhängigkeit des detektierten Lichts von der Signatur des ausgesendeten, modulierten Lichts berechnet.

Die EP 1 562 406 A1 beschreibt eine Vorrichtung zum Überwachen des Zustands von LEDs, welche in Fluchtschildern und Sicherheits-Beleuchtungsgeräten angeordnet sind. Ein Strombeaufschlagungsmittel versorgt die LEDs mit einem gepulsten Strom, sodass Sie abwechselnd an- und ausgeschaltet sind. Das Beleuchtungsgerät umfasst einen Lichtsensor, welcher die Beleuchtungsstärke innerhalb des Beleuchtungsgeräts umfasst. Die Messsignale, welche der Lichtsensor bei angeschalteten und ausgeschalteten LEDs jeweils ermittelt, werden einer Vergleichseinrichtung zugeführt. Durch Berechnen des Unterschieds zwischen den beiden Messergebnissen kann auf die Beleuchtungsstärke der LEDs und somit auf deren Zustand rückgeschlossen werden.

Die DE 10 2005 051 212 A1 beschreibt eine Vorrichtung zur Überwachung der Funktion einer Leuchtdiode. Hierbei steuert ein Mikroprozessor die Leuchtdiode derart an, dass sie abwechselnd leuchtet und dunkel bleibt. Ein lichtempfindliches Element ist mit dem Mikroprozessor verbunden, sodass mittels des Mikroprozessors eine Helligkeitsmessung vorgenommen werden kann. Hierbei wird der Zeitpunkt der Messung mit dem Zeitpunkt der Ansteuerung der Leuchtdiode synchronisiert.

Aufgabe der vorliegenden Erfindung ist es, eine Vorrichtung zum Ermitteln eines Betriebsparameters von zumindest einem Leuchtmittel einer Lichtquelle eines Kraftfahrzeuges zu schaffen, mittels welcher Zustände unterschiedlicher Beleuchtungsstärke der Lichtquelle auf verbesserte Weise erfassbar sind.

Die Aufgabe wird gelöst durch eine Vorrichtung mit den Merkmalen des Patentanspruchs 1, durch ein Kraftfahrzeug mit den Merkmalen des Patentanspruchs 13 und durch ein Verfahren mit den Merkmalen des Patentanspruchs 14. Vorteilhafte Ausgestaltungen mit zweckmäßigen Weiterbildungen der Erfindung sind in den abhängigen Patentansprüchen angegeben.

Die erfindungsgemäße Vorrichtung zum Ermitteln eines Betriebsparameters von zumindest einem Leuchtmittel einer Lichtquelle eines Kraftfahrzeuges umfasst eine Ansteuereinheit zum Ansteuern von wenigstens zwei Zuständen unterschiedlicher Beleuchtungsstärke der Lichtquelle, einen Lichtsensor und eine Auswerteeinheit zum Auswerten von mittels des Lichtsensors erzeugten Signalen, wobei wenigstens zwei der mittels des Lichtsensors erzeugten Signale mit wenigstens zwei der durch das Ansteuern mittels der Ansteuereinheit bewirkten unterschiedlichen Zustände der Beleuchtungsstärke der Lichtquelle korreliert sind, und wobei die an einem von der Lichtquelle beleuchtbaren Ort vorliegende Beleuchtungsstärke bestimmbar ist.

Hierbei ist die Auswerteeinheit dazu ausgelegt, durch ein Vergleichen von Zuständen unterschiedlicher Beleuchtungsstärke der Lichtquelle einen von der Lichtquelle des Kraftfahrzeuges erbrachten Beitrag zu der mittels des Lichtsensors erfassten Beleuchtungsstärke zu bestimmen, welche an dem von der Lichtquelle beleuchteten Ort bestimmt wird. Wenn in einem ersten Zustand der Lichtquelle des Kraftfahrzeuges das zumindest eine Leuchtmittel der Lichtquelle abgeschaltet oder vollständig abgeschirmt ist, kann so die Beleuchtungsstärke kraftfahrzeugfremder Lichtquellen bestimmt werden. Wird in einem zweiten Zustand die Lichtquelle des Kraftfahrzeuges zugeschaltet, ist die an einem von der Lichtquelle des Kraftfahrzeuges beleuchtbaren Ort bestimmte Beleuchtungsstärke in diesem zweiten Zustand der Lichtquelle erhöht.

Zudem ist eine Steuer- oder Regeleinrichtung vorgesehen, mittels welcher eine Frequenz und/oder eine Dauer eines der wenigstens zwei durch das Ansteuern mittels der Ansteuereinheit bewirkten unterschiedlichen Zustände der Beleuchtungsstärke der Lichtquelle in Abhängigkeit von einer im zeitlichen Mittel nicht zu unterschreitenden Beleuchtungsstärke der Lichtquelle steuer- oder regelbar ist.

Dadurch kann sichergestellt werden, dass beim Ermitteln der Beleuchtungsstärke der Lichtquelle des Kraftfahrzeuges im Fahrbetrieb im zeitlichen Mittel gesetzlich vorgeschriebene Mindestwerte der Beleuchtungsstärke etwa des Scheinwerfers eingehalten werden, obwohl einzelne Leuchtmittel oder alle Leuchtmittel kurzzeitig ausgeschaltet sind.

Des Weiteren ist mittels der Vorrichtung die Beleuchtungsstärke der wenigstens zwei Leuchtmittel aufweisenden Lichtquelle des Kraftfahrzeuges durch ein für jedes der wenigstens zwei Leuchtmittel einzeln bewirktes Ansteuern der wenigstens zwei Zustände unterschiedlicher Beleuchtungsstärke ermittelbar. So kann mittels der Ansteuereinheit ein erster Zustand herbeigeführt werden, in welchem die Gesamtheit aller Leuchtmittel ausgeschaltet ist, während in einem zweiten Zustand die Gesamtheit aller Leuchtmittel der Lichtquelle des Kraftfahrzeuges angeschaltet ist. Dadurch kann die gesamte Beleuchtungsstärke etwa des Scheinwerfers ermittelt werden. Wird hierbei ein Abweichen der Beleuchtungsstärke des Scheinwerfers von einem vorgebbaren Referenzwert festgestellt, so kann durch sukzessives Abschalten einer zunehmend größeren Anzahl von Leuchtmitteln festgestellt werden, welches Leuchtmittel an Leuchtkraft eingebüßt hat oder ausgefallen ist. Vorliegend werden zum Diagnostizieren der Leuchtmittel jedes einzelne der wenigstens zwei Leuchtmittel einzeln in die zwei Zustände unterschiedlicher Beleuchtungsstärke überführt.

Dadurch sind Zustände unterschiedlicher Beleuchtungsstärke der Lichtquelle des Kraftfahrzeuges auf verbesserte Weise erfassbar. Hierbei kann die Beleuchtungsstärke etwa eines Scheinwerfers des Kraftfahrzeuges bestimmt werden. Ein Abnehmen der Beleuchtungsstärke des Scheinwerfers ist auf besonders einfache Weise diagnostizierbar.

In einer vorteilhaften Ausgestaltung der Erfindung ist der Lichtsensor als Bildsensor ausgebildet, wobei die von der Auswerteeinheit auszuwertenden Signale Bilddaten umfassen. Der Bildsensor kann hierbei etwa als CCD-Bildsensor, CMOS-Sensor, Fotodiode oder dergleichen ausgebildet sein. Durch das Vergleichen bzw. Auswerten der Bilddaten mittels der Auswerteeinheit ist ein besonders gut zu realisierendes Auswerten diskreter Zustände der Beleuchtungsstärke der Lichtquelle ermöglicht.

Weiterhin ist es von Vorteil, wenn die Vorrichtung die Lichtquelle umfasst, wobei die Lichtquelle wenigstens eines LED, eine Gasentladungslampe und/oder eine Glühlampe, insbesondere eine Halogenglühlampe aufweist. So sind Leuchtmittel bereitgestellt, welche auf besonders einfache Weise ein Ansteuern von wenigstens zwei Zuständen unterschiedlicher Beleuchtungsstärke der Lichtquelle des Kraftfahrzeuges ermöglichen.

In einer weiteren vorteilhaften Ausgestaltung der Erfindung sind die wenigstens zwei der durch das Ansteuern mittels der Ansteuereinheit bewirkten unterschiedlichen Zustände der Beleuchtungsstärke der Lichtquelle mit Schaltzuständen der wenigstens einen LED korreliert. Schaltzustände, in denen die wenigstens eine LED einmal angeschaltet und einmal ausgeschaltet ist, lassen sich besonders einfach elektronisch ansteuern. Hierbei kann eine Pulsweitenmodulation zum Einsatz kommen, bei welcher eine Zeitdauer, in welcher die LED in den abgeschalteten Zustand versetzt ist mit der Zeitdauer korreliert ist, in welcher der Bildsensor die Bilddaten erfasst. Ein Synchronisieren bzw. Korrelieren der Zustände unterschiedlicher Beleuchtungsstärke der die wenigstens eine LED aufweisenden Lichtquelle mit dem Erzeugen der Bilddaten durch den Bildsensor ist so besonders einfach zu realisieren.

Des Weiteren ist es von Vorteil, wenn die Ansteuereinheit eine, insbesondere mechanische und/oder als LCD-Einheit ausgebildete, Blende umfasst. Dadurch kann, insbesondere wenn die Lichtquelle Leuchtmittel aufweist, deren Lichtstrom mit dem Ausschalten nicht schlagartig auf einen Wert von Null fällt, wie etwa eine Gasentladungslampe und/oder eine Glühlampe, mittels der Blende ein Zustand angesteuert werden, in welchem durch den Lichtsensor kein von der Lichtquelle des Kraftfahrzeuges ausgehender Lichtstrom erfasst wird.

In einer weiteren vorteilhaften Ausgestaltung der Erfindung ist mittels der Vorrichtung die Beleuchtungsstärke der wenigstens zwei Leuchtmittel aufweisenden Lichtquelle des Kraftfahrzeuges durch ein gleichzeitig für eine Gesamtheit der wenigstens zwei Leuchtmittel oder sukzessive für eine unterschiedliche Anzahl der wenigstens zwei Leuchtmittel bewirktes Ansteuern der wenigstens zwei Zustände unterschiedlicher Beleuchtungsstärke ermittelbar.

Des Weiteren ist es von Vorteil, wenn mittels des Lichtsensors eine Reflexion von Licht des zumindest einen Leuchtmittels erfassbar ist. Dadurch ist ein Ausrichten des Lichtsensors ermöglicht, bei welchem eine Einfallsrichtung des mittels des Lichtsensors erfassten Lichtes etwa einer Abstrahlrichtung eines Scheinwerfers gleich ist. Dies ermöglicht ein besonders flexibles und die Beleuchtungsstärke der Lichtquelle nicht beeinträchtigendes Anordnen des Lichtsensors.

Von Vorteil ist es weiterhin, wenn zumindest der Lichtsensor dazu ausgelegt ist, an dem Kraftfahrzeug angeordnet zu werden. Dadurch ist ein nicht ortsgebundenes Ermitteln der Beleuchtungsstärke etwa eines Scheinwerfers des Kraftfahrzeuges ermöglicht.

In einer weiteren, vorteilhaften Ausgestaltung der Erfindung ist der Lichtsensor dazu ausgelegt, in einer Einrichtung zum Erkennen einer Fahrspur, zum Erkennen eines von dem Kraftfahrzeug verschiedenen Objektes, oder zum Erfassen einer Intensität eines Niederschlages, eines Umgebungslichtes und/oder einer Vorfeldbeleuchtung integriert zu werden. Hierbei kann etwa der Bildsensor zusätzlich Funktionen eines Regen-Licht-Sensors erfüllen, oder, etwa im Rahmen einer Abstandsregelung, Funktionen einer Fahrzeugerkennung und/oder Funktionen einer Fahrspurerkennung, bei welcher der Bildsensor Signale für einen Spurhalteassistenten erzeugt. Durch das Integrieren des Lichtsensors in die Einrichtung mit weiteren Funktionalitäten ist ein Ausbilden der Vorrichtung in einer besonders kompakten Bauform ermöglicht.

Von Vorteil ist es weiterhin wenn die Vorrichtung weiterhin eine Signalisierungseinheit umfasst, mittels welcher eine verminderte Beleuchtungsstärke der das zumindest eine Leuchtmittel aufweisende Lichtquelle und/oder eine verminderte Beleuchtungsstärke des zumindest einen Leuchtmittels signalisierbar ist. So kann etwa beim Ausfall eines Leuchtmittels eine Notwendigkeit eines Austausches signalisiert werden. Hierbei sind optische, etwa auf einer Anzeige darstellbare, und/oder akustische Signalisierungen vorstellbar.

In einer vorteilhaften Ausgestaltung der Erfindung ist die Vorrichtung in einem Fahrbetrieb des Kraftfahrzeuges und/oder in einem Standbetrieb des Kraftfahrzeuges aktivierbar. Insbesondere beim Einschalten des Scheinwerfers bei stehendem Kraftfahrzeug, etwa unmittelbar nach dem Einsteigen, wird meist nicht sofort die maximal mögliche Beleuchtungsstärke des Scheinwerfers benötigt, weswegen das Ansteuern von Zuständen verminderter Beleuchtungsstärke weitgehend unkritisch ist. Dasselbe gilt für ein Einschalten des Scheinwerfers bei Dämmerung. Es ist jedoch ebenfalls von Vorteil, mittels der Vorrichtung ein Abnehmen der Beleuchtungsstärke des Scheinwerfers im Fahrbetrieb erkennen zu können.

Schließlich hat es sich als vorteilhaft gezeigt, wenn mittels der Steuer- oder Regeleinrichtung eine Frequenz und/oder eine Dauer eines der wenigstens zwei durch das Ansteuern mittels der Ansteuereinheit bewirkten unterschiedlichen Zustände der Beleuchtungsstärke der Lichtquelle in Abhängigkeit von einer absolut nicht zu überschreitenden Beleuchtungsstärke der Lichtquelle und/oder von einer Wahrnehmbarkeit eines der wenigstens zwei Zustände mit verminderter Beleuchtungsstärke mittels eines menschlichen Auges steuer- oder regelbar ist.

Dadurch kann die Beleuchtungsstärke der Lichtquelle reduziert werden, wenn dies äußere Umstände, wie beispielsweise Gegenverkehr, eine besonders hohe Beleuchtungsstärke kraftfahrzeugfremder Lichtquellen oder dergleichen ermöglichen oder notwendig machen. Des Weiteren kann so sichergestellt werden, dass das menschliche Auge das Ansteuern des Zustandes verminderter Beleuchtungsstärke der Lichtquelle nicht, etwa als Flackern der Lichtquelle, wahrnimmt. Auch diese Wahrnehmbarkeit durch das menschliche Auge ist von Umgebungsbedingungen, wie der Beleuchtungsstärke kraftfahrzeugfremder Lichtquellen, abhängig.

Die im Zusammenhang mit der erfindungsgemäßen Vorrichtung beschriebenen bevorzugten Ausführungsform und Vorteile gelten soweit anwendbar, auch für das erfindungsgemäße Kraftfahrzeug sowie für das erfindungsgemäße Verfahren zum Ermitteln eines Betriebsparameters von zumindest einem Leuchtmittel einer Lichtquelle eines Kraftfahrzeuges.

Weitere Vorteile, Merkmale und Einzelheiten der Erfindung ergeben sich aus der nachfolgenden Beschreibung bevorzugter Ausführungsbeispiele sowie anhand der Zeichnungen, in welchen gleiche oder funktionsgleiche Elemente mit identischen Bezugszeichen versehen sind. Dabei zeigen:
- Fig. 1: eine stark schematisierte Darstellung einer Vorrichtung zum Ermitteln eines Betriebsparameters von Leuchtmitteln einer Lichtquelle eines Kraftfahrzeuges;
- Fig. 2: ein schematisiertes Kraftfahrzeug mit der Vorrichtung gemäß Fig. 1; und
- Fig. 3: eine Beleuchtungsstärke eines Leuchtmittels als Funktion der Zeit, wobei die Beleuchtungsstärke mit Zeitintervallen zum Erfassen von Bilddaten mittels eines Bildsensors zeitlich korreliert ist.

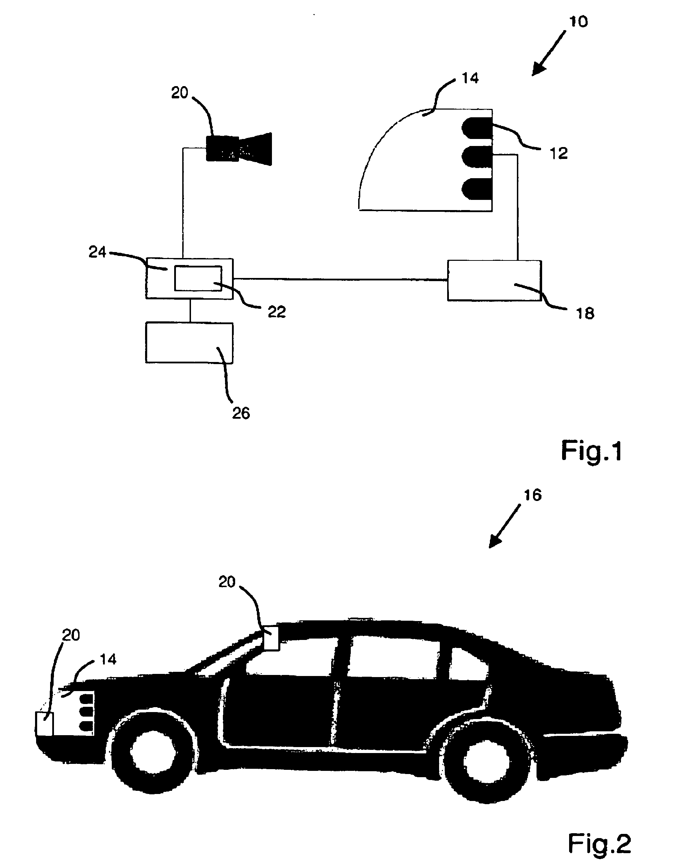

Fig. 1 zeigt eine Vorrichtung 10 zum Ermitteln eines Betriebsparameters von Leuchtmitteln 12 einer Lichtquelle 14 eines in Fig. 2 gezeigten Kraftfahrzeuges 16. Die Lichtquelle 14 ist vorliegend ein Scheinwerfer des Kraftfahrzeuges 16. Die Leuchtmittel 12 sind als LEDs ausgebildet. Den Leuchtmitteln 12 ist eine Ansteuereinheit 18 zugeordnet, mittels welcher Zustände unterschiedlicher Beleuchtungsstärke der Lichtquelle 14 angesteuert werden können. So können einzelne oder die Gesamtheit der als LEDs ausgebildeten Leuchtmittel 12 zeitweise oder dauerhaft abgeschaltet und angeschaltet werden.

Die Vorrichtung 10 umfasst gemäß Figur 1 weiterhin einen Lichtsensor 20 welcher vorliegend als Bildsensor, also etwa als CCD-Bildsensor, CMOS-Sensor oder als Fotodiode ausgebildet ist. Der Lichtsensor 20 ist zum Erfassen der Beleuchtungsstärke der Lichtquelle 14 des Kraftfahrzeuges 16 und zum Erfassen von der Beleuchtungsstärke kraftfahrzeugfremder, vorliegend nicht gezeigter Lichtquellen ausgebildet.

Die Vorrichtung 10 umfasst weiter eine Auswerteeinheit 22 zum Auswerten von mittels des Lichtsensors 20 erzeugten Signalen, wobei die Signale vorliegend Bilddaten umfassen. Die Auswerteeinheit 22 ist gemäß Fig. 1 in eine Steuer- und Regeleinrichtung 24 integriert.

Werden die Leuchtmittel 12 der Lichtquelle 14 von der Ansteuereinheit 18 derart angesteuert, dass alle Leuchtmittel 12 kurzzeitig ausgeschaltet sind, so kann der Bildsensor 20 die Beleuchtungsstärke der kraftfahrzeugfremden Lichtquellen ermitteln und der Auswerteeinheit 22 ein entsprechendes Signal übermitteln. Werden mittels der Ansteuereinheit 18 anschließend alle Leuchtmittel 12 der Lichtquelle 14 in einen angeschalteten Zustand versetzt, so erfasst der Lichtsensor 20 die Beleuchtungsstärke der Lichtquelle 14 zusätzlich zu der Beleuchtungsstärke der kraftfahrzeugfremden Lichtquellen. Aus dem Unterschied der den zwei beschriebenen Zuständen zugeordneten Beleuchtungsstärken kann die Beleuchtungsstärke der Lichtquelle 14 des Kraftfahrzeuges 16 ermittelt werden. Dadurch ist es insbesondere ermöglicht, ein Nachlassen der Beleuchtungsstärke der Lichtquelle 14 festzustellen.

Wird in einem ersten Schritt aus dem Vergleich der zwei beschriebenen Zustände der Beleuchtungsstärke eine gegenüber einem Referenzwert der Beleuchtungsstärke der Lichtquelle 14 verminderte Beleuchtungsstärke ermittelt, so kann in einem zweiten Schritt ein Beitrag jedes einzelnen Leuchtmittels 12 der Lichtquelle 14 zu der Beleuchtungsstärke des Leuchtmittels 14 ermittelt werden. So kann während des Erzeugens des Bilddaten umfassenden Signals mittels des Lichtsensors 20 die Ansteuereinheit 18 lediglich eines der als LED ausgebildeten Leuchtmittel 12 in einen angeschalteten Zustand versetzen, während alles übrigen LEDs ausgeschaltet sind. In dem zum Erzeugen des zweiten Bilddaten umfassenden Signals mittels des Lichtsensors 20 anzusteuernden Zustand wird durch die Ansteuereinheit 18 die zuvor angeschaltete LED ausgeschaltet. Die Steuer- oder Regeleinrichtung 24 sorgt hierbei dafür, dass im zeitlichen Mittel die Beleuchtungsstärke der Lichtquelle 14 eine etwa gesetzlich vorgeschriebene Mindestbeleuchtungsstärke nicht unterschreitet.

Ebenso kann mittels der Steuer- oder Regeleinrichtung 24 die Ansteuereinheit 18 so beeinflusst werden, dass die Beleuchtungsstärke der Lichtquelle 14 einem bestimmten Wert, welcher etwa von der Beleuchtungsstärke der kraftfahrzeugfremden Lichtquellen abhängen kann, nicht überschreitet. Zudem ist durch die Steuer- oder Regeleinrichtung 24 sicher gestellt, dass die Zustände verminderter Beleuchtungsstärke der Lichtquelle 14 durch ein menschliches Auge nicht wahrnehmbar sind.

Die Vorrichtung 10 umfasst gemäß Fig. 1 des Weiteren eine Signalisierungseinheit 26, etwa ein Display, welches zum Signalisieren einer verminderten Beleuchtungsstärken der Lichtquelle 14 oder eines Leuchtmittels 12 dient. So kann durch die Signalisierungseinheit 26 bei nachlassender Beleuchtungsstärke der Lichtquelle 14 eine Aufforderung zum Austausch des Leuchtmittels 12 oder der betroffenen Leuchtmittel 12 erfolgen.

In Fig. 2 sind alternative Anordnungsmöglichkeiten des Lichtsensors 20 an dem Kraftfahrzeug 16 schematisch dargestellt. So kann der Lichtsensor 20 in einem vorliegend nicht dargestellten Spiegelfuß eines ebenfalls nicht gezeigten Innenspiegels des Kraftfahrzeuges 16 integriert sein. Hierbei kann der als Bildsensor ausgebildete Lichtsensor 20 weitere Funktionalitäten, wie die eines Regen-Licht-Sensors, einer Fahrzeugerkennung, und/oder einer Spurerkennung aufweisen.

Der in dem Spiegelfuß angeordnete Lichtsensor 20 ist zum Erfassen von Licht ausgelegt, welches durch die Lichtquelle 14 rückreflektiertes Licht mitumfasst. Hierbei sind selbstverständlich Umgebungsbedingungen zu ermitteln, welche einen Einfluss auf das mittels des Lichtsensors 20 erfassbare Licht haben. Durch das Erfassen der Reflexionsbedingungen der Umgebung kann ein Referenzwert der Beleuchtungsstärke erhalten werden, auf welchen die zusätzlich durch die Lichtquelle 14 des Kraftfahrzeuges 16 bereit gestellte Beleuchtungsstärke bezogen werden kann. Hierbei kann etwa eine Sichtweite mittels eines vorliegend nicht gezeigten Lasers bestimmt werden.

Weitere, das mittels des Lichtsensors 20 erfassbare, rückreflektierte Licht der Lichtquelle 14 beeinflussende Umgebungsbedingungen umfassen eine Umgebungshelligkeit, ein Vorliegen von Nebel, eine Fahrgeschwindigkeit des Kraftfahrzeuges 16, einen Abstand zu von dem Kraftfahrzeug 16 verschiedenen Objekten, wie beispielsweise Fahrzeugen, Straßenschildern, Bäumen und dergleichen sowie eine Größe dieser Objekte. Ein vorliegend nicht gezeigter optischer Sensor kann zum Ermitteln der Rückreflexion einer Fahrbahnoberfläche herangezogen werden, wobei gegebenenfalls ein Vorhandensein von Wasser auf der Fahrbahnoberfläche mit zu berücksichtigen ist. Vorstellbar ist es, bestimmte Umgebungsdaten, wie eine Beschaffenheit und ein Alter der Fahrbahnoberfläche als etwa in einem Navigationssystem abspeicherbaren Datensatz zur Verfügung zu stellen.

In Fig. 2 ist eine alternative Anordnungsmöglichkeit des Lichtsensors 20 gezeigt, bei welcher der Lichtsensor 20 in dem die Lichtquelle 14 darstellenden Scheinwerfer des Kraftfahrzeuges 16 angeordnet ist. Hierbei kann der Lichtsensor 20 zum direkten Erfassen des von der Lichtquelle 14 erzeugten oder zum Erfassen des von der Lichtquelle 14 rückreflektierten Lichtes ausgebildet sein.

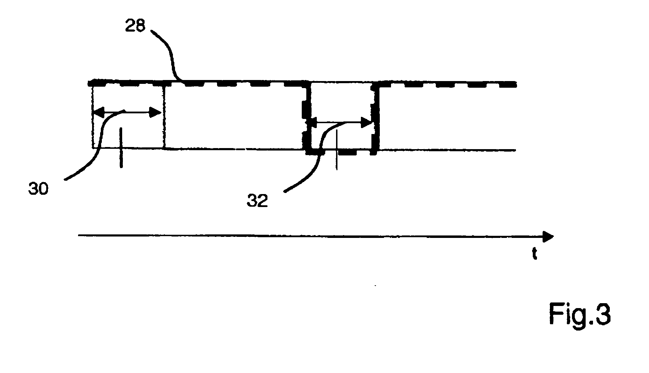

In Fig. 3 ist schematisch ein Verlauf 28 des Schaltzustandes eines als LED ausgebildeten Leuchtmittels 12 als Funktion der Zeit t mittels einer gestrichelten Linie dargestellt. Der Verlauf 28 des Schaltzustandes der LED entspricht hierbei einem pulsweitenmodulierten Betrieb der LED. Hierbei wechselt ein Zustand in welchem die LED angeschaltet ist, mit einem Zustand, in welchem die LED abgeschaltet ist. In einem ersten Zeitintervall 30 werden mittels des als Bildsensor ausgebildeten Lichtsensors 20 Bilddaten aufgezeichnet, welche den Zustand der Beleuchtungsstärke bei angeschalteter LED erfassen. Das zweite Zeitintervall 32 zum Aufzeichnen von Bilddaten ist mit dem Zustand zeitlich korreliert, in welchem die LED mittels der Ansteuereinheit 18 in den ausgeschalteten Zustand überführt ist.

Die Dauer des ausgeschalteten Zustandes der LED und die Dauer des zweiten Zeitintervalls 32 sind hierbei gleich. So kann durch Vergleichen der in dem ersten Zeitintervall 30 und in dem zweiten Zeitintervall 32 erfassten Bilddaten der Beitrag der LED zu der mittels des Lichtsensors 20 erfassten Beleuchtungsstärke erfasst werden. Selbstverständlich ist die Anzahl der zum Ermitteln der Beleuchtungsstärke der Leuchtmittels 12 des Kraftfahrzeuges 16 heranzuziehenden Bilddaten nicht auf die veranschaulichend in Fig. 3 gezeigten zwei Vergleichsaufnahmen beschränkt, sondern es können eine Vielzaht von Bilddaten zum Ermitteln der Beleuchtungsstärke der Leuchtmittel 12 der Lichtquelle 14 herangezogen werden.

In alternativen Ausführungsformen der Vorrichtung 10 ist es vorstellbar, etwa die Auswerteeinheit 22, und/oder die Ansteuereinheit 18 und/oder den Lichtsensor 20 in eine Einheit integriert auszubilden. Ebenso kann die Auswerteeinheit 22 die Funktion der Steuer- oder Regeleinrichtung 24 und/oder die Funktion der Ansteuereinheit 18 mit übernehmen.

## Patentansprüche

1. Vorrichtung zum Ermitteln eines Betriebsparameters von zumindest einem Leuchtmittel (12) einer Lichtquelle (14) eines Kraftfahrzeuges (16),
umfassend
- eine Ansteuereinheit (18) zum Ansteuern von wenigstens zwei Zuständen unterschiedlicher Beleuchtungsstärke der Lichtquelle (14),
- einen Lichtsensor (20) und
- eine Auswerteeinheit (22) zum Auswerten von mittels des Lichtsensors (20) erzeugten Signalen,
wobei wenigstens zwei der mittels des Lichtsensors (20) erzeugten Signale mit wenigstens zwei der durch das Ansteuern mittels der Ansteuereinheit (18) bewirkten unterschiedlichen Zuständen der Beleuchtungsstärke der Lichtquelle (14) korreliert sind, und wobei die an einem von der Lichtquelle (14) beleuchtbaren Ort vorliegende Beleuchtungsstärke bestimmbar ist,
wobei die Auswerteeinheit (22) dazu ausgelegt ist, durch Vergleichen der wenigstens zwei durch das Ansteuern bewirkten Zustände unterschiedlicher Beleuchtungsstärke der Lichtquelle (14) einen von der Lichtquelle (14) erbrachten Beitrag zu der mittels des Lichtsensors (20) erfassten Beleuchtungsstärke zu bestimmen,
wobei eine Steuer- oder Regeleinrichtung (24) vorgesehen ist, mittels welcher eine Frequenz und/oder eine Dauer eines der wenigstens zwei durch das Ansteuern mittels der Ansteuereinheit (18) bewirkten unterschiedlichen Zustände der Beleuchtungsstärke der Lichtquelle (14) in Abhängigkeit von einer im zeitlichen Mittel nicht zu unterschreitenden Beleuchtungsstärke der Lichtquelle (14) steuer- oder regelbar ist, **dadurch gekennzeichnet, dass**
mittels der Vorrichtung (10) die Beleuchtungsstärke der wenigstens zwei Leuchtmittel (12) aufweisenden Lichtquelle (14) des Kraftfahrzeuges (16) durch ein für jedes einzelne der wenigstens zwei Leuchtmittel (12) einzeln bewirktes Ansteuern der wenigstens zwei Zustände unterschiedlicher Beleuchtungsstärke ermittelbar ist.

2. Vorrichtung nach Anspruch 1,
**dadurch gekennzeichnet, dass**
der Lichtsensor (20) als Bildsensor ausgebildet ist, wobei die von der Auswerteeinheit (22) auszuwertenden Signale Bilddaten umfassen.

3. Vorrichtung nach Anspruch 1 oder 2,
**dadurch gekennzeichnet, dass**
sie weiterhin die Lichtquelle (14) umfasst, wobei die Lichtquelle (14) wenigstens eine LED, eine Gasentladungslampe und/oder eine Glühlampe, insbesondere eine Halogenglühlampe, aufweist.

4. Vorrichtung nach Anspruch 3,
**dadurch gekennzeichnet, dass**
die wenigstens zwei der durch das Ansteuern mittels der Ansteuereinheit (18) bewirkten unterschiedlichen Zustände der Beleuchtungsstärke der Lichtquelle (14) mit Schaltzuständen der wenigstens einen LED korreliert sind.

5. Vorrichtung nach Anspruch 3 oder 4,
**dadurch gekennzeichnet, dass**
die Ansteuereinheit (18) eine, insbesondere mechanische und/oder als LCD-Einheit ausgebildete, Blende umfasst.

6. Vorrichtung nach einem der Ansprüche 1 bis 5,
**dadurch gekennzeichnet, dass**
mittels der Vorrichtung (10) die Beleuchtungsstärke der wenigstens zwei Leuchtmittel (12) aufweisenden Lichtquelle (14) des Kraftfahrzeuges (16) durch ein
- gleichzeitig für eine Gesamtheit der wenigstens zwei Leuchtmittel (12) oder
- sukzessive für eine unterschiedliche Anzahl der wenigstens zwei Leuchtmittel (12)
bewirktes Ansteuern der wenigstens zwei Zustände unterschiedlicher Beleuchtungsstärke ermittelbar ist.

7. Vorrichtung nach einem der Ansprüche 1 bis 6,
**dadurch gekennzeichnet, dass**
mittels des Lichtsensors (20) eine Reflexion von Licht des zumindest einen Leuchtmittels (12) erfassbar ist.

8. Vorrichtung nach einem der Ansprüche 1 bis 7,
**dadurch gekennzeichnet, dass**
zumindest der Lichtsensor (20) dazu ausgelegt ist, an dem Kraftfahrzeug (16) angeordnet zu werden.

9. Vorrichtung nach Anspruch 8,
**dadurch gekennzeichnet, dass**
der Lichtsensor (20) dazu ausgelegt ist, in eine Einrichtung zum Erkennen einer Fahrspur, zum Erkennen eines von dem Kraftfahrzeug verschiedenen Objektes, oder zum Erfassen einer Intensität eines Niederschlages, eines Umgebungslichtes und/oder einer Vorfeldbeleuchtung integriert zu werden.

10. Vorrichtung nach einem der Ansprüche 1 bis 9,
**dadurch gekennzeichnet, dass**
die Vorrichtung (10) weiterhin eine Signalisierungseinheit (26) umfasst, mittels welcher eine verminderte Beleuchtungsstärke der das zumindest eine Leuchtmittel (12) aufweisenden Lichtquelle (14) und/oder eine verminderte Beleuchtungsstärke des zumindest einen Leuchtmittels (12) signalisierbar ist.

11. Vorrichtung nach einem der Ansprüche 1 bis 10,
**dadurch gekennzeichnet, dass**
die Vorrichtung (10) in einem Fahrbetrieb des Kraftfahrzeuges (16) und/oder in einem Standbetrieb des Kraftfahrzeuges (16) aktivierbar ist.

12. Vorrichtung nach einem der Ansprüche 1 bis 11,
**dadurch gekennzeichnet, dass**
mittels der Steuer- oder Regeleinrichtung (24) die Frequenz und/oder die Dauer eines der wenigstens zwei durch das Ansteuern mittels der Ansteuereinheit (18) bewirkten unterschiedlichen Zustände der Beleuchtungsstärke der Lichtquelle (14) in Abhängigkeit von
- einer absolut nicht zu überschreitenden Beleuchtungsstärke der Lichtquelle (14) und/oder von
- einer Wahrnehmbarkeit eines der wenigstens zwei Zustände mit verminderter Beleuchtungsstärke mittels eines menschlichen Auges steuer- oder regelbar ist.

13. Kraftfahrzeug mit einer zumindest ein Leuchtmittel (12) aufweisenden Lichtquelle (14),
**dadurch gekennzeichnet, dass**
das Kraftfahrzeug (16) eine Vorrichtung (10) zum Ermitteln eines Betriebsparameters des zumindest einen Leuchtmittels (12) nach einem der Ansprüche 1 bis 12 aufweist.

14. Verfahren zum Ermitteln eines Betriebsparameters von zumindest einem Leuchtmittel (12) einer Lichtquelle (14) eines Kraftfahrzeuges (16), wobei
- eine Ansteuereinheit (18) zum Ansteuern von wenigstens zwei Zuständen unterschiedlicher Beleuchtungsstärke der Lichtquelle (14),
- ein Lichtsensor (20) und
- eine Auswerteeinheit (22) zum Auswerten von mittels des Lichtsensors (20) erzeugten Signalen, vorgesehen sind,
wobei wenigstens zwei der mittels des Lichtsensors (20) erzeugten Signale mit wenigstens zwei der durch Ansteuern mittels der Ansteuereinheit (18) bewirkten unterschiedlichen Zuständen der Beleuchtungsstärke der Lichtquelle (14) korreliert werden, und wobei die an einem von der Lichtquelle (14) beleuchtbaren Ort vorliegende Beleuchtungsstärke bestimmt wird,
mit den Schritten:
- Vergleichen der wenigstens zwei durch das Ansteuern bewirkten Zustände unterschiedlicher Beleuchtungsstärke der Lichtquelle (14),
- Bestimmen eines von der Lichtquelle (14) erbrachten Beitrags zu der mittels des Lichtsensors (20) erfassten Beleuchtungsstärke,
- Steuern oder Regeln einer Frequenz und/oder einer Dauer eines der wenigstens zwei durch das Ansteuern mittels der Ansteuereinheit (18) bewirkten unterschiedlichen Zustände der Beleuchtungsstärke der Lichtquelle (14) in Abhängigkeit von einer im zeitlichen Mittel nicht zu unterschreitenden Beleuchtungsstärke der Lichtquelle (14)
**dadurch gekennzeichnet, dass**
- jedes einzelne von wenigstens zwei Leuchtmitteln (12) der Lichtquelle (14) einzeln in die zwei Zustände unterschiedlicher Beleuchtungsstärke überführt wird.

## Claims

1. Device for calculating an operating parameter of at least one illuminant (12) of a light source (14) of a motor vehicle (16), said device comprising
- a control unit (18) for controlling at least two states of differing luminance intensity of the light source (14),
- a light sensor (20), and
- an evaluation unit (22) using the light sensor (20) to evaluate generated signals,
wherein at least two signals generated by the light sensor (20) are correlated with at least two different states of the luminance intensity of the light source (14), which luminance intensity is controlled by the control unit (18), and the present luminance intensity of a location illuminated by the light source (14) is determinable,
the evaluation unit (22) being designed to determine the contribution of the light source (14) to luminance intensity, which is detected by the light sensor (20), by comparing the at least two states, effected by the controlling, of differing luminance intensity of the light source (14),
a controlling or regulating instrument (24) being provided by means of which a frequency and/or a duration of one of the at least two differing states, which are effected by the controlling of the control unit (18), of the luminance intensity of the light source (14) can be controlled or regulated as a function of a luminance intensity of the light source (14), which luminance intensity is not to exceed an averaged time,
**characterised in that**
by means of the device (10), the luminance intensity of the light source (14) of the motor vehicle (16), which light source has at least two illuminants (12), is calculated by an individually activated controlling of the at least two states of the differing luminance intensity for each individual one of the at least two illuminants (12).

2. Device according to claim 1,
**characterised in that**
the light sensor (20) is configured as an image sensor, the signals to be evaluated by the evaluation unit (22) comprising image data.

3. Device according to claim 1 or claim 2,
**characterised in that**
it furthermore comprises the light source (14), said light source (14) having at least one LED, one gas discharge lamp and/or one filament lamp, in particular a halogen incandescent lamp.

4. Device according to claim 3,
**characterised in that**
the at least two differing states, which are effected by controlling by means of the control unit (18), of the luminance intensity of the light source (14) are correlated with the switching status of the at least one LED.

5. Device according to claim 3 or claim 4,
**characterised in that**
the control unit (18) comprises a mask that is specifically configured as a mechanical and/or an LCD unit.

6. Device according to any of claims 1 to 5,
**characterised in that**
by means of the device (10), the luminance intensity of the light source (14), having at least two illuminants (12), of the motor vehicle (16) is calculated by the effected controlling of the at least two states of differing luminance intensity, which control is effected
- simultaneously for an entirety of the at least two illuminants (12) or
- successively for a differing number of the at least two illuminants (12).

7. Device according to any of claims 1 to 6,
**characterised in that**
a reflection of light of the at least one illuminant (12) can be calculated using the light sensor (20).

8. Device according to any of claims 1 to 7,
**characterised in that**
at least the light sensor (20) is designed to be arranged on the motor vehicle (16).

9. Device according to claim 8,
**characterised in that**
the light sensor (20) is designed to be integrated in a system for recognising a traffic lane, for recognising an object different from the motor vehicle, or for detecting intensity of precipitation, ambient light, and/or light in front of the vehicle.

10. Device according to any of claims 1 to 9,
**characterised in that**
the device (10) moreover comprises a signalling unit (26) by means of which a reduced luminance intensity of the light source (14) having at least one illuminant (12) and/or a reduced luminance intensity of the at least one illuminant (12) can be signalled.

11. Device according to any of claims 1 to 10,
**characterised in that**
the device (10) can be activated during the normal driving of the motor vehicle (16) and/or while the motor vehicle (16) is stationary.

12. Device according to any of claims 1 to 11,
**characterised in that**
by means of the controlling or regulating instrument (24), the frequency and/or the duration of one of the at least two differing states of the luminance intensity of the light source (14), which states are effected by the controlling of the control unit (18), can be controlled or regulated as a function of
- a luminance intensity of the light source (14), which luminance intensity is absolutely not to be exceeded, and/or
as a function of
- a perceptibility to the human eye of one of the at least two states with reduced luminance intensity.

13. A motor vehicle with a light source (14) having at least one illuminant (12),
**characterised in that**
the motor vehicle (16) has a device (10) for calculating an operating parameter of the at least one illuminant (12) according to any of claims 1 to 12.

14. A method for calculating an operating parameter of at least one illuminant (12) of a light source (14) of a motor vehicle (16), wherein
- a control unit (18) for controlling at least two states of differing luminance intensity of the light source (14),
- a light sensor (20), and
- an evaluation unit (22) for evaluating signals generated by the light sensor (20), are provided,
wherein at least two signals generated by the light sensor (20) are correlated with at least two differing states of the luminance intensity of the light source (14), which luminance intensity is controlled by the control unit (18), and wherein the present luminance intensity of a location illuminated by the light source (14) is determinable,
having the steps of:
- comparing the at least two states, effected by the controlling, of differing luminance intensity of the light source (14),
- determining the contribution from the light source (14) to luminance intensity, which is detected by the light sensor (20),
- controlling or regulating a frequency and/or a duration of one of the at least two differing states, which are effected by the controlling of the control unit (18), of the luminance intensity of the light source (14) as a function of a luminance intensity of the light source (14), which luminance intensity is not to exceed an averaged time,
**characterised in that**
- each individual one of the at least two illuminants (12) of the light source (14) is individually converted into the two states of differing luminance intensity.

## Revendications

1. Dispositif pour établir un paramètre de fonctionnement d'au moins un moyen d'éclairage (12) d'une source de lumière (14) d'un véhicule automobile (16), comprenant :
- une unité de commande (18) pour commander au moins deux états d'intensité d'éclairage différente de la source de lumière (14),
- un capteur de lumière (20) et
- une unité d'exploitation (22) pour exploiter des signaux générés au moyen du capteur de lumière (20), dans lequel au moins deux des signaux générés au moyen du capteur de lumière (20) sont corrélés avec au moins deux des états différents, provoqués par la commande au moyen de l'unité de commande (18), de l'intensité d'éclairage de la source de lumière (14) et dans lequel on peut déterminer l'intensité d'éclairage existante à un endroit qui peut être éclairé par la source de lumière (14),
dans lequel l'unité d'exploitation (22) est conçue pour déterminer par comparaison des au moins deux états, provoqués par la commande, d'intensité d'éclairage différente de la source de lumière (14) une contribution fournie par la source de lumière (14) à l'intensité d'éclairage enregistrée au moyen du capteur de lumière (20),
dans lequel il est prévu un dispositif de commande ou de réglage (24), au moyen duquel une fréquence et/ou une durée d'un des au moins deux états différents, provoqués par la commande au moyen de l'unité de commande (18), de l'intensité d'éclairage de la source de lumière (14) peut ou peuvent être commandées ou réglées en fonction d'une intensité d'éclairage de la source de lumière (14) en dessous de laquelle on ne peut descendre en moyenne temporelle, **caractérisé en ce que**,
au moyen du dispositif (10), l'intensité d'éclairage de la source de lumière (14), présentant au moins deux moyens d'éclairage (12), du véhicule automobile (16) peut être établie par une commande, provoquée individuellement pour chacun des au moins deux moyens d'éclairage (12), des au moins deux états d'intensité d'éclairage différente.

2. Dispositif selon la revendication 1,
**caractérisé en ce que**
le capteur de lumière (20) se présente sous la forme d'un capteur d'image, dans lequel les signaux à exploiter par l'unité d'exploitation comprennent des données d'image.

3. Dispositif selon la revendication 1 ou 2,
**caractérisé en ce que**
il comprend en outre la source de lumière (14), dans lequel la source de lumière (14) comporte au moins une DEL, une lampe à décharge et/ou une lampe à incandescence, en particulier une lampe halogène.

4. Dispositif selon la revendication 3,
**caractérisé en ce que**
les au moins deux états différents, provoqués par la commande au moyen de l'unité de commande (18), de l'intensité d 'éclairage de la source de lumière (14) sont corrélés avec des états de commutation de la au moins une DEL.

5. Dispositif selon la revendication 3 ou 4,
**caractérisé en ce que**
l'unité de commande (18) comprend un écran, en particulier mécanique et/ou se présentant sous la forme d'une unité LCD.

6. Dispositif selon l'une quelconque des revendications 1 à 5,
**caractérisé en ce que**,
au moyen du dispositif (10), l'intensité d'éclairage de la source de lumière (14) du véhicule automobile (16) présentant au moins deux moyens d'éclairage (12) peut être établie par une commande provoquée
- en même temps pour un ensemble des au moins deux moyens d'éclairage (12) ou
- successivement pour un nombre différent des au moins deux moyens d'éclairage (12)
des au moins deux états d'intensité d'éclairage différente.

7. Dispositif selon l'une quelconque des revendications 1 à 6,
**caractérisé en ce que**
une réflexion de la lumière du au moins un moyen d'éclairage (12) peut être détectée au moyen du capteur de lumière (20).

8. Dispositif selon l'une quelconque des revendications 1 à 7,
**caractérisé en ce que**
au moins le capteur de lumière (20) est conçu pour être agencé sur le véhicule automobile (16).

9. Dispositif selon la revendication 8,
**caractérisé en ce que**
le capteur de lumière (20) est conçu pour être intégré à un dispositif pour identifier une bande de circulation, pour identifier un objet différent du véhicule automobile ou pour détecter l'intensité d'une précipitation, d'une lumière ambiante et/ou d'un éclairage situé à l'avant du véhicule?.

10. Dispositif selon l'une quelconque des revendications 1 à 9,
**caractérisé en ce que**
le dispositif (10) comprend en outre une unité de signalisation (26), au moyen de laquelle on peut signaliser une intensité d'éclairage réduite de la source de lumière (14) présentant le au moins un moyen d'éclairage (12) et/ou une intensité d'éclairage réduite du au moins un moyen d'éclairage.

11. Dispositif selon l'une quelconque des revendications 1 à 10,
**caractérisé en ce que**
le dispositif (10) peut être activé en cours de circulation du véhicule automobile (16) et/ou en marche à l'arrêt du véhicule automobile (16).

12. Dispositif selon l'une quelconque des revendications 1 à 11,
**caractérisé en ce que**,
au moyen du dispositif de commande ou de réglage (24), la fréquence et/ou la durée d'un des au moins deux états différents, provoqués par la commande au moyen de l'unité de commande (18), de l'intensité d'éclairage de la source de lumière (14) peut/peuvent être commandée(s) ou réglée(s) en fonction
- d'une intensité d'éclairage de la source de lumière (14) à absolument ne pas dépasser et/ou
- d'une perception d'un des au moins des deux états avec au moins une intensité d'éclairage réduite au moyen d'un oeil humain.

13. Véhicule automobile avec une source de lumière (14) présentant au moins un moyen d'éclairage (12),
**caractérisé en ce que**
le véhicule automobile (16) présente un dispositif (10) pour établir un paramètre de fonctionnement du au moins un moyen d'éclairage (12) selon l'une quelconque des revendications 1 à 12.

14. Procédé pour établir un paramètre de fonctionnement d'au moins un moyen d'éclairage (12) d'une source de lumière (14) d'un véhicule automobile (16), dans lequel on prévoit
- une unité de commande (18) pour commander au moins deux états d'intensité d'éclairage différente de la source de lumière (14),
- un capteur de lumière (20) et
- une unité d'exploitation (22) pour exploiter des signaux générés au moyen du capteur de lumière (20),
dans lequel au moins deux des signaux générés au moyen du capteur de lumière (20) sont corrélés avec au moins deux des états différents, provoqués par la commande au moyen de l'unité de commande (18), de l'intensité d'éclairage de la source de lumière (14) et dans lequel l'intensité d'éclairage existant à un endroit pouvant être éclairé par la source de lumière (14) peut être déterminée, le procédé comprenant les étapes consistant à :
- comparer les au moins deux états provoqués par la commande d'intensité d'éclairage différente de la source de lumière (14),
- déterminer une contribution fournie par la source de lumière (14) à l'intensité d'éclairage détectée au moyen du capteur de lumière (20),
- commander ou régler une fréquence et/ou une durée d'un des au moins deux états différents, provoqués par la commande au moyen de l'unité de commande (18), de l'intensité d'éclairage de la source de lumière (14) en fonction d'une intensité d'éclairage de la source de lumière (14) en dessous de laquelle on ne doit pas descendre en moyenne temporelle,
**caractérisé en ce que**
- chacun des au moins deux moyens d'éclairage (12) de la source de lumière (14) est transformé individuellement dans les deux états d'intensité d'éclairage différente.
